# EUROPEAN PATENT APPLICATION

(11) **EP 4 477 581 A1**
(43) Date of publication of application: **18.12.2024**
(21) Application number: 23752224.8
(22) Date of filing: 10.01.2023
(51) Int. Cl.: B65G 1/137, B65G 1/10, B65G 1/12

(54) **REMOVAL METHOD AND STORAGE METHOD FOR WAREHOUSE GOODS, AND HANDLING ROBOT**

(30) Priority: 09.02.2022 CN 202210122820
(71) Applicant: Shenzhen Mita Robot Co., Ltd., Shenzhen, Guangdong 518107 (CN)
(72) Inventor: GAO, Qingshi, Shenzhen, Guangdong 518107 (CN); ZHANG, Qinqi, Shenzhen, Guangdong 518107 (CN)
(74) Representative: Cabinet Chaillot
(86) International application number: PCT/CN2023/071522
(87) International publication number: WO 2023/151444

(57) **Abstract**

An outbound method and an inbound method for warehouse goods, and a carrying robot are provided. The method includes: in response to an outbound instruction, determining position information of a target container (a) to be moved out indicated by the outbound instruction, the target container (a) being one of a plurality of containers stacked in a vertical direction; if there is a container group comprising at least one container stacked above the target container, driving a first carrying mechanism (2) of a carrying robot to lift the container group; driving a second carrying mechanism (3) of the carrying robot to move the target container (a) away from a first position after the lifting of the container group is completed, and driving the first carrying mechanism (2) to release the container group when the first position is idle; updating position information of each container in the container group.

## Description

### CROSS-REFERENCE TO RELATED APPLICATIONS

The present application is based on and claims the priority of Chinese patent application number 202210122820.2, filed on February 9, 2022, and the entire content of the Chinese patent application is incorporated herein by reference.

### TECHNICAL FIELD

The present application relates to the technical field of warehousing, and more particularly, to an outbound method and an inbound method for warehouse goods, and a carrying robot.

### BACKGROUND

With the rapid development of artificial intelligence technology, automation technology and information technology, the degree of intelligence of end-to-end logistics is also increasing, and intelligent logistics terminals are the trend of development of the end-to-end logistics. A carrying robot is one of the main equipment that can realize the intelligent logistics terminal and perform automated carrying operations. The use of the carrying robot can reduce the heavy physical labor of human beings and improve the efficiency of carrying operations. Box-type intelligent warehousing systems in the related art require high investment and have a long project cycle. When the business changes, transformation of the warehouse is slow, and the speed of business adjustment is slow, leading to a poor adaptability of the warehouse to business changes.

### SUMMARY OF THE INVENTION

The present application provides an outbound method and an inbound method for warehouse goods, and a carrying robot, so as to solve the technical problem of how to improve the adaptability of a warehouse to business changes and reduce the investment in rack facilities.

The technical solutions of the present application are implemented as follows.

Embodiments of the present application provide an outbound method for warehouse goods, the method including: in response to an outbound instruction, determining position information of a target container to be moved out indicated by the outbound instruction, the target container being one of a plurality of containers stacked in a vertical direction; if there is a container group comprising at least one container stacked above the target container, driving a first carrying mechanism of a carrying robot to lift the container group; driving a second carrying mechanism of the carrying robot to move the target container away from a first position after the lifting of the container group is completed, and driving the first carrying mechanism to release the container group when the first position is idle; updating position information of each container in the container group.

In the above solution, the position information is represented by three-dimensional coordinates; before driving the first carrying mechanism of the carrying robot to lift the container group, the method further comprises: driving the first carrying mechanism and the second carrying mechanism to move in the vertical direction based on a coordinate of the vertical direction in the three-dimensional coordinates of the target container.

In the above solution, before driving the first carrying mechanism of the carrying robot to lift the container group, the method further comprises: driving the carrying robot to move to a corresponding carrying position in an area where the target container is located based on the three-dimensional coordinates of the target container.

In the above solution, before the carrying mechanism lifts or moves the container, the method further comprises: driving the carrying mechanism to align with one corresponding container based on a position identifier on an outer surface of the corresponding container; or
photographing one corresponding container and driving the carrying mechanism to align with the corresponding container based on a picture area where the corresponding container is located in a picture obtained from the photographing.

In the above solution, after driving the second carrying mechanism of the carrying robot to move the target container away from the first position, the method further comprises: placing the target container on a buffer mechanism of the carrying robot.

In the above solution, the method further comprises: updating the position information of the target container based on information of a buffer position at which the target container is placed.

In the above solution, the method further comprises: driving the second carrying mechanism of the carrying robot to move the target container away from the first position if there is no container stacked above the target container.

Embodiments of the present application further provide an inbound method for warehouse goods, the method comprising: in response to an inbound instruction, determining information of a to-be-stored position of a target container indicated by the inbound instruction; if there a container group comprising at least one container stacked above the to-be-stored position of the target container, driving a first carrying mechanism of a carrying robot to lift the container group; driving a second carrying mechanism of the carrying robot to move the target container from a buffer mechanism to a first position after the lifting of the container group is completed, and driving the first carrying mechanism to release the container group to above the target container after the target container is moved to the first position; updating position information of each container in the container group and position information of the target container.

In the above solution, the position information is represented by three-dimensional coordinates; before driving the first carrying mechanism of the carrying robot to lift the container group, the method further comprises: driving the first carrying mechanism and the second carrying mechanism to move in the vertical direction based on a coordinate of the vertical direction in the three-dimensional coordinates.

In the above solution, before the driving the first carrying mechanism of the carrying robot to lift the container group, the method further comprises: driving the carrying robot to move to a corresponding carrying position in an area where the target container is to be stored based on the three-dimensional coordinates.

In the above solution, before the carrying mechanism lifts the container group, the method further comprises: driving the carrying mechanism to align with one corresponding container based on a position identifier on an outer surface of the corresponding container; or photographing one corresponding container and driving the carrying mechanism to align with the corresponding container based on a picture area in which the corresponding container is located in a picture obtained from the photographing.

Embodiments of the present application further provide a carrying robot configured to carry warehouse goods, including: a mobile bracket extending in a vertical direction and being movable; a first carrying mechanism configured to carry a container group located above a target container or a container group stacked above a to-be-stored position of a target container, wherein the container group comprises at least one container, and the first carrying mechanism is arranged on a first side of the mobile bracket; a second carrying mechanism configured to carry the target container, the second carrying mechanism being arranged on the first side of the mobile bracket and located below the first carrying mechanism; a first lifting mechanism configured to drive the first carrying mechanism to move in the vertical direction; a second lifting mechanism configured to drive the second carrying mechanism to move in the vertical direction independently of the first carrying mechanism; and a buffer mechanism fixed on a second side of the mobile bracket and configured to store the target container carried by the second carrying mechanism.

In the above solution, the first lifting mechanism comprises: a first driving wheel configured to be driven to rotate around a horizontal direction; a first synchronizing wheel spaced apart from the first driving wheel in the vertical direction and rotatable around the horizontal direction; a first synchronizing belt connected to the first driving wheel and the first synchronizing wheel, and configured to drive the first synchronizing wheel to rotate along with the first driving wheel; a first connecting block connected to the first synchronizing belt and the first carrying mechanism, and configured to drive the first carrying mechanism to move in the vertical direction along with the first synchronizing belt; and/or,
wherein the second lifting mechanism comprises: a second driving wheel configured to be driven to rotate around the horizontal direction; a second synchronizing wheel spaced apart from the second driving wheel in the vertical direction and rotatable around the horizontal direction; a second synchronizing belt connected to the second driving wheel and the second synchronizing wheel, and configured to drive the second synchronizing wheel to rotate along with the second driving wheel; and a second connecting block connected to the second synchronizing belt and the second carrying mechanism, and configured to drive the second carrying mechanism to move in the vertical direction along with the second synchronizing belt.

In the above solution, the buffer mechanism comprises a plurality of buffer shelves arranged at intervals in the vertical direction, and the buffer shelves are fixedly connected to the mobile bracket to store the target container.

In the above solution, the first carrying mechanism comprises: a first mounting member connected to the first lifting mechanism to move up or down in the vertical direction; two first telescopic arms both movably connected to the first mounting member, and the two first telescopic arms being arranged opposite to each other and synchronously reciprocally translatable in a first direction relative to the first mounting member to carry the container group, wherein the first direction belongs to the horizontal direction.

In the above solution, the first mounting member comprises: a top wall extending in the first direction; two side walls extending in the first direction and connected below the top wall, the two side walls being arranged opposite to each other; wherein the two first telescopic arms are connected to opposite surfaces of the two side walls, respectively.

In the above solution, a first end of each first telescopic arm is provided with an extension arm extending towards the second carrying mechanism, and the first end is an end of the first telescopic arm away from the side wall in an extended state.

In the above solution, one end of each extension arm away from the first telescopic arm is provided with a catch portion, and the catch portions are extendable and retractable in opposite directions between the two first telescopic arms to connect and disengage from one corresponding container.

In the above solution, the second carrying mechanism comprises: a second mounting member connected to the second lifting mechanism to move up or down in the vertical direction; a third mounting member connected below the second mounting member, the third mounting member configured to be translatable in a horizontal direction relative to the second mounting member, or translatable and rotate around a horizontal direction; two second telescopic arms both movably connected to the third mounting member, the two second telescopic arms being arranged opposite to each other and synchronously reciprocally translatable in a first direction relative to the third mounting member, wherein the first direction belongs to the horizontal direction.

Embodiments of the present application provide an outbound method and an inbound method for warehouse goods, and a carrying robot. In the outbound method, the containers are stored in a stacked manner, the carrying robot carries the target container to be moved out indicated in the outbound instruction, and in the case where there is a container group above the target container that hinders the carrying of the target container, the carrying robot can first lift the container group and then carry the target container. The position information of the containers is updated after completion of the carrying, so that the position of each container in the warehouse can be accurately recorded. The whole outbound process only needs the position information of the containers for container positioning and carrying, and there is no need to use the rack to store the containers and there is also no need to position the rack that stores the containers. On the premise that the rack is not needed to build the warehouse, the user can quickly deploy and relocate the warehouse, which can not only improve the efficiency of goods storage and carrying, but can also make it possible to quickly adjust the warehousing business, meeting the needs of diversified warehousing business and improving the adaptability of the warehouse to business changes. The inbound method corresponds to the outbound method, and in the inbound and carrying process, the container group above the to-be-moved position of the target container is lifted first, the target container is moved into the to-be-moved position, the container group is released, and position information of the containers is updated. In the carrying process, only the position information of the container needs to be used for positioning and carrying, and there is no need to provide a rack. The carrying robot includes a mobile bracket, a first carrying mechanism, a second carrying mechanism, a first lifting mechanism and a second lifting mechanism, and the first lifting mechanism and the second lifting mechanism respectively control lifting of the first carrying mechanism and lifting of the second carrying mechanism independently of each other, so as to enable the first carrying mechanism to carry the container group, and the second carrying mechanism to carry the target container, thereby realizing container carrying in the inbound and outbound processes in a warehouse without racks.

### BRIEF DESCRIPTION OF THE DRAWINGS

FIG. 1 is a flowchart illustrating an outbound method for warehouse goods according to an embodiment of this application;
FIG. 2 is a flowchart illustrating an inbound method for warehouse goods according to an embodiment of this application;
FIG. 3 is a perspective view of a carrying robot in a working state according to an embodiment of this application;
FIG. 4 is a front view of a carrying robot in a working state according to an embodiment of this application;
FIG. 5 is a schematic diagram showing a first carrying mechanism that is lifting a container group according to an embodiment of this application;
FIG. 6 is a schematic diagram showing a second carrying mechanism that is moving a target container out according to an embodiment of this application;
FIG. 7 is a schematic diagram showing a second carrying mechanism that is placing a target container on a buffer shelf according to an embodiment of this application;
FIG. 8 is a schematic structural diagram of a first carrying mechanism according to an embodiment of this application;
FIG. 9 is a schematic structural diagram of a second carrying mechanism according to an embodiment of this application.

### Reference Numerals:

1, mobile bracket; 11, roller; 2, first carrying mechanism; 21, first mounting member; 22, first telescopic arm; 211, top wall; 212, side wall; 221, first end; 222, extension arm; 2221, bottom end; 2222. catch portion; 3, second carrying mechanism; 31, second mounting member; 32. third mounting member; 33. second telescopic arm; 4. first lifting mechanism; 41. first driving wheel; 42. first synchronizing wheel; 43. first synchronizing belt; 44. first connecting block; 5. second lifting mechanism; 51. second driving wheel; 52. second synchronizing wheel; 53. second synchronizing belt; 54. second connecting block; a. target container; 6. buffer mechanism; 61. buffer shelf.

### DETAILED DESCRIPTION OF THE EMBODIMENTS

To make the objectives, technical solutions, and advantages of this application clearer, the following further describes this application in detail with reference to the accompanying drawings and embodiments. It should be understood that the specific embodiments described herein are only used to explain the present application and are not intended to limit the present application.

In the case of no contradiction, the various specific technical features described in the specific embodiments may be combined in any suitable manner, for example, different embodiments and technical solutions may be formed by a combination of different specific technical features. In order to avoid unnecessary repetition, various possible combinations of the specific technical features in this application are not described separately.

In the following description, the terms "first/second/......" are used to distinguish different objects only and do not indicate that the objects have something in common or have correlation therebetween. It should be understood that the orientations involved such as "above", "below", "outer", and "inner" are all orientations in the normal use state, the direction terms "left" and "right" indicate the left and right directions illustrated in the specific corresponding schematic diagrams, and may or may not be the left and right directions of the normal use state. The XYZ coordinate system defines absolute coordinates in a normal use state.

It should be noted that the terms "comprise", "include" or any other variations thereof are intended to cover a non-exclusive inclusion, so that a process, method, article, or apparatus that includes a set of elements includes not only those elements, but also other elements that are not explicitly listed, or elements inherent to such a process, method, article, or apparatus. Without further limitation, recitation of an element by using the phrase "includes a......" does not preclude the existence of another identical element in the process, method, article, or apparatus that includes the element. The term "plurality" means being greater than or equal to two.

Embodiments of the present application provide an outbound method for warehouse goods. It should be noted that the warehouse goods in the embodiments of the present application may be supported by a container and, therefore, for simplicity, the container is used to represent the warehouse goods. Parameters associated with the container, such as shape or size, are not limited, and all the containers of the warehouse may be of one or more types of standardized parts; of course, in other embodiments, the stored goods may not be supported by the container, and may be represented directly by the goods itself or in other forms. A plurality of containers is stacked in a vertical direction to form a column of containers, and a plurality of columns of containers may also be stored in the warehouse. By describing the plurality of containers as being stacked in the embodiments of the present application, it means that the containers are stacked without using a rack to support the respective containers, and surfaces of adjacent containers in the same column in the vertical direction are at least in partial contact with each other. It should be understood that the ground of the warehouse is generally a horizontal plane, that is, each column of containers extends in a direction perpendicular to the ground; of course, the ground of the warehouse may have a concave or convex area, that is, the horizontal plane is not required to be absolutely horizontal, so the corresponding vertical direction is not required to be absolute vertical, allowing the existence of errors in the level of the ground and errors in manufacturing the containers.

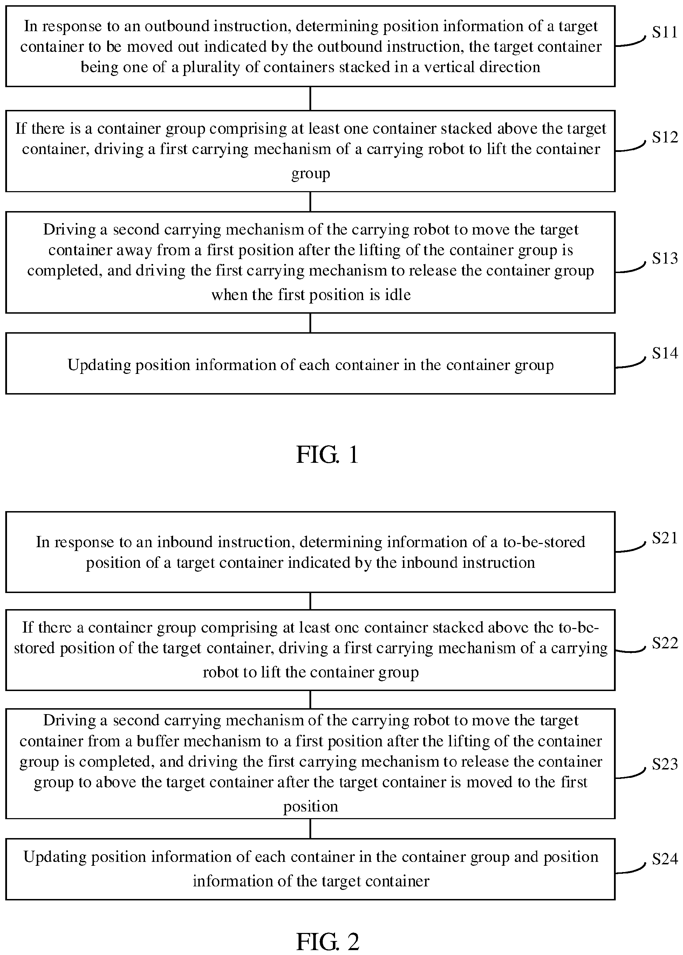

As shown in FIG. 1, the outbound method for warehouse goods in accordance with this embodiment of the present application includes the following steps.

At step S11, in response to an outbound instruction, position information of a target container to be moved out indicated by the outbound instruction is determined. The target container is one of a plurality of containers stacked in a vertical direction; and the outbound instruction refers to an instruction for moving one of the plurality of containers stacked in a warehouse from a position in the instruction by a carrying robot. Of course, the outbound instruction may further include set position information of a set position to which the target container is to be moved. In this embodiment of the present application, each container in the warehouse has a unique identification code, and database of a warehouse storage system stores therein position information and categories of goods stored in the container corresponding to each identification code. In this embodiment of the application, the identification code corresponding to the target container may be queried, and the position information corresponding to the identification code is called in the database, thereby forming the outbound instruction for the target container. The identification code of each container in the database is fixed, that is, the identification code corresponding to each container does not change with the change of the position of the container, for example, a certain container corresponds to the identification code with a serial number of 0010. The position information of each container can be changed with the outbound and inbound operations to the container, that is, the position information corresponding to each identification code is changed. In this embodiment of the present application, the carrying robot may move to a position near the target container based on the current position information of the target container in the outbound instruction.

At step S12, if there is a container group including at least one container stacked above the target container, a first carrying mechanism of the carrying robot is driven to lift the container group. In this embodiment of the present application, the containers in the warehouse are stacked, and before the carrying robot approaches the target container for carrying, the carrying robot detects that there is another container, which is not the target container, above the target container. As the another container is not the target container in the outbound instruction, the first carrying mechanism of the carrying robot is driven to lift the another container above the target container. It should be noted that, in the process that the carrying robot detects that there is another container, which is not the target container, above the target container, the detection by the carrying robot may be implemented in various ways. For example, the carrying robot may directly receive information or an instruction from a control center, the information containing contents indicative of the presence of another container, which is not the target container, above the target container. Alternatively, the carrying robot is provided with a sensor, and the sensor on the carrying robot can detect whether another container, which is not the target container, is present above the target container. Of course, the detection in this embodiment of the present application can be realized in, but is not limited to, the above ways, as long as it is able to determine whether there is another container above the target container.

The target container may be any one of the containers in the column where the target container is located and, therefore, one or more containers may be provided above the target container. Of course, the target container may also be located at a top layer of the column of containers.

In one embodiment of the present application, in the case where the target container is located at a middle layer or a bottom layer, the whole formed by all the containers above the target container is defined as a container group, and the container group may include one container or may include a plurality of containers. In a case where the target container is not located at the top layer of the whole column of goods, the first carrying mechanism of the carrying robot is driven to lift the container group above the target container. In the embodiment of the present application, the height lifted by the first carrying mechanism is not limited, as long as the container group is separated apart from an upper surface of the target container. When the container group is separated apart from the upper surface of the target container, the target container is not subjected to the pressure of the container group, and the carrying robot can then remove the target container individually from the column of containers. In some embodiments, the containers in the same column are of the same height, and the height the first carrying mechanism lifts the container group is less than or equal to one container height. By limiting the lifting height of the first carrying mechanism within a certain range, transportation of the target container can be facilitated, the energy consumed for lifting the container group can be saved, and the cost is reduced. It should be noted that the carrying in this embodiment of the present application includes a series of operations performed on the containers, such as, lifting, dropping, releasing, and grasping.

At Step S13, in the case where the lifting of the container group is completed, that is, when the first carrying mechanism lifts the container group to a certain height away from the target container, a second carrying mechanism of the carrying robot is driven to move the target container away from a first position. The first position refers to a position of the target container in the containers of the column where the target container is located, and the first position may be represented by position information of the target container in the outbound instruction. Moving the target container away from the first position refers to that one or more operations such as, grasping, lifting, stretching and retracting, and the like, are carried out by the second carrying mechanism of the carrying robot, so that the target container is no longer located in the containers arranged in column, that is, the target container leaves the first position where the target container was located before being moved away. In addition, in the case where the first position is idle, the first carrying mechanism is driven to release the container group, so that the container group is stacked on the surface of the container below the target container before the target container was moved away. It should be noted that "the first position is idle" refers to that after the target container is moved away from the column where the target container is located, the position where the target container was originally located becomes a space that is not filled with any container, that is, the position is in an idle state. It can be understood that under the condition that the target container is located at the bottom layer of the column where the target container is located, no other container exists below the target container, and the lower surface of the target container is in contact with the ground or another surface; then it can be understood that after the target container is moved away, the container group is released onto the ground or the another surface. If the target container is not located at the bottommost layer in the warehouse goods, under the condition that the second conveying mechanism has moved the target container away from the first position, there is another container arranged below the first position, and the first carrying mechanism releases the container group to the surface of the container below the first position. After completion of the carrying of the target container, the stacked storage of other containers can still be maintained.

At step S14, the position information of each container in the container group is updated. After the target container is moved away from the first position where it was originally located, the container group that was originally located above the target container needs to be moved downward in the vertical direction and, accordingly, the position information of each container in the container group needs to be updated to accurately record the position of each container in the warehouse, while the position of the containers originally located below the target container does not change, so the position information of these containers does not need to be updated.

In some embodiments, if there is no container stacked above the target container, that is, the target container is located at the top layer of the column of goods, the second carrying mechanism of the carrying robot may be driven to directly move the target container away from the first position. In addition, in this case, the column where the target container is located does not have the container group stacked above the target container and, therefore, there is no need to update the position information of any container group after the target container is moved away.

Embodiments of the present application provide an outbound method for warehouse goods. In the method, the containers are stored in a stacked manner, the carrying robot carries the target container to be moved out indicated in the outbound instruction, and in the case where there is a container group above the target container that hinders the carrying of the target container, the carrying robot can first lift the container group and then carry the target container. The position information of the containers is updated after completion of the carrying, so that the position of each container in the warehouse can be accurately recorded. The whole outbound process only needs the position information of the containers for container positioning and carrying, and there is no need to use the rack to store the containers and there is also no need to position the rack that stores the containers. On the premise that the rack is not needed to build the warehouse, the user can quickly deploy and relocate the warehouse, which can not only improve the efficiency of goods storage and carrying, but can also make it possible to quickly adjust the warehousing business, meeting the needs of diversified warehousing business and improving the adaptability of the warehouse to business changes.

In some embodiments, the position information is represented by three-dimensional coordinates. It should be noted that the three-dimensional coordinates in the embodiments of present application are used to represent a world coordinate system, which is an objective space for defining positions in the physical world, that is, the position information indicates absolute coordinate values. In practice, the coordinates of the container are uniformly used to calibrate a fixed point of the container, for example, a right upper corner of a front surface of the container or a central position of the front surface of the container, so that based on a known size of the container, the carrying robot can be accurately aligned with and carry the container.

In some embodiments, before driving the first carrying mechanism of the carrying robot to lift the container group, the carrying method further includes: driving the first carrying mechanism and the second carrying mechanism to move in the vertical direction based on a coordinate of the vertical direction in the three-dimensional coordinates of the target container. The first carrying mechanism is used to carry the container group and the second carry mechanism is used to carry the target container. Therefore, the first carrying mechanism is located above the second carrying mechanism, and when the second carrying mechanism moves to the coordinate of the vertical direction in the three-dimensional coordinates of the target container, the first carrying mechanism needs to move to a position above the target container in order not to interfere with the movement of the second carrying mechanism, for facilitating the first carrying mechanism carrying the container group above the target container.

In some embodiments, before driving the first carrying mechanism of the carrying robot to lift the container group, the method further includes: driving the carrying robot to move to an area where the target container is located based on the three-dimensional coordinates of the target container. In this embodiment of the present application, the area where the target container is located may be any area of the warehouse, which represents a space near the target container or in which the target container is located, and the area where the target container is located may be used to roughly represent the position of the target container, rather than accurately representing the position of the target container. When the carrying robot receives the outbound instruction, a certain distance may exist between the carrying robot and the target container, and the carrying robot may move to the area where the target container is located according to the position information of the target container in the outbound instruction, that is, the carrying robot reaches the area of the rough position of the target container. It should be noted that the movement of the carrying robot includes, but is not limited to, movement in a horizontal direction, but may also be movement in a non-horizontal direction with a certain slope. The carrying robot may navigate to the area where the target container is located according to the x-coordinate and y-coordinate of the three-dimensional coordinates in the horizontal directions.

In some embodiments, before the carrying mechanism lifts or moves the container, the carrying method further includes: driving the carrying mechanism to align with the corresponding container based on a position identifier on an outer surface of the corresponding container. It should be understood that the term "align" used herein expresses the meaning of positional alignment, that is, the carrying mechanism is aligned with the position where the corresponding container is located, and the standard of alignment can be such that the carrying mechanism can accurately grasp and move the corresponding container. The carrying robot is provided with two carrying mechanisms, namely, a first carrying mechanism and a second carrying mechanism, and the above-mentioned position identifier-based method is applicable to both the first carrying mechanism and the second carrying mechanism; that is, the first carrying mechanism is aligned with the container group, and the second carrying mechanism is aligned with the target container. In the case where the robot moves close to the target container, the position identifier-based alignment enables the carrying mechanism to carry the corresponding container more accurately. Each container in the warehouse has one such position identifier, and the position identifier may be a mark with position information, such as a two-dimensional code, a bar code, or the like, and the position identifier may also be a pattern such as a triangle, right-angled sides, or the like. Embodiments of the present application do not limit the shape and pattern of the position identifier; as long as the position identifier is disposed at a fixed portion of the container, the carrying mechanism can be quickly aligned with the corresponding container through the position identifier.

For example, in the positioning process of the first carrying mechanism, the first carrying mechanism can be moved to a position above the target container according to the coordinate of the vertical direction in the position information of the target container. For example, when the coordinate of the target container in the vertical direction is 1.8m, and the height of each container is 0.2m, the first carrying mechanism is first moved to a position of a height of 2m, so as to achieve preliminary positioning of the first carrying mechanism. In the case where there is a container group above the target container, the first carrying mechanism is used to carry the container group above the target container, and therefore, the first carrying mechanism needs to be aligned with one container above the target container, and the containers stacked above the target container can be lifted together by lifting such one container above the target container. Therefore, the first carrying mechanism can identify the position identifier on the container above the target container, so that the first carrying mechanism can realize accurate secondary positioning with the container above the target container. In the case where the target container is located at the top layer of one column of goods, there is no other container above the target container, and therefore, it is only necessary to move the first carrying mechanism to the position above the target container.

In the positioning process of the second carrying mechanism, the second carrying mechanism can be first moved to the position corresponding to the target container according to the coordinate in the vertical direction in the position information of the target container. For example, when the coordinate of the target container in the vertical direction is 1.8m, the second carrying mechanism is first moved to a position of a height of 1.8m relative to the ground, so as to realize coarse positioning of the second carrying mechanism. Then, the second carrying mechanism is aligned with the position identifier on the target container, so as to realize a secondary accurate positioning of the second carrying mechanism. It should be noted that the manner of aligning the carrying mechanism with the position identifier on the container includes, but is not limited to, image recognition.

In embodiments of the present application, the position identifier is arranged on each container. The first carrying mechanism and the second carrying mechanism are driven to achieve preliminary positioning thereof according to the position information of the container, and then, by using the position identifier on the container, the first carrying mechanism is accurately aligned with one container in the container group that is close to the target container, and the second carrying mechanism is accurately aligned with the target container. The accuracy of the container grasping position and improved reliability of container grasping can thus be achieved.

In some embodiments, after the preliminary positioning of the first carrying mechanism and the second carrying mechanism is completed, it may not be necessary to perform a secondary positioning of both the first carrying mechanism and the second carrying mechanism relative to the corresponding container. For example, the first carrying mechanism may be first accurately positioned relative to the container above the target container, and then the position between the second carrying mechanism and the first carrying mechanism may be calibrated, so that the second carrying mechanism is aligned with the target container, that is, the direct alignment process between the second carrying mechanism and the target container is eliminated, thereby eliminating the need for the deployment of related alignment devices on the second carrying mechanism and reducing the manufacturing cost of the carrying robot.

In some embodiments, it is also possible to align the carrying mechanism with the corresponding container by photographing the corresponding container and driving the carrying mechanism to align with the corresponding container based on a picture area where the corresponding container is located in a picture obtained from the photographing. That is, in the process of accurately aligning the carrying mechanism with the container, in addition to the alignment method based on the position identifier described in the previous embodiment, the alignment can also be realized by directly performing image recognition and positioning on the container. The first carrying mechanism may be provided with a first image acquisition module, through which image information of the container close to the target container in the container group may be collected, which enables the first carrying mechanism to be aligned with the container by identifying an outer contour of the container. A second image acquisition module may also be arranged on the second carrying mechanism, and image information of the target container can be acquired through the second image acquisition module, which enables the second carrying mechanism to be aligned with the target container by identifying an outer contour of the target container.

This embodiment of the present application adopts the method of image recognition of the outer contour of the container, which can be used to replace the identifier-based method for alignment between the carrying mechanism and the container. It should be noted that the manner of aligning the carrying mechanism and the corresponding container according to embodiments of the present application includes, but is not limited to, those described in the above-mentioned several embodiments, as long as the alignment between the carrying mechanism and the corresponding container can be achieved.

In some embodiments, after the second carrying mechanism of the carrying robot moves the target container away from the first position, the method further includes: placing the target container on a buffer mechanism of the carrying robot. That is, after the second transport mechanism moves the target container out of the goods, the second carrying mechanism may place the target container on the buffer mechanism of the carrying robot, so that the carrying robot may quickly proceed with the carrying process of a next target container, that is, the carrying robot does not need to carry the container to a designated target position before carrying the next container. That is to say, the carrying time for the respective containers may partially overlap, thereby improving the carrying efficiency.

In some embodiments, the method further includes: updating the position information of the target container based on buffer position information of a buffer position where the target container is placed. When the target container is transported to the buffer mechanism, the position information of the target container changes and therefore needs to be updated. It can be understood that the buffer position information of the buffer position where the target container is positioned refers to position information of a position on the buffer mechanism that is close to the target container; for example, the buffer mechanism is provided with a plurality of buffer shelves spaced in the vertical direction, and the buffer position information can be represented by the position information of the buffer shelf on which the target container is placed. By updating the position information of the target container to the buffer position information of the position where the target container is placed, real-time updating of the position of the container is facilitated, so that the buffer position of the target container can be accurately retrieved in the subsequent process of transporting the target container to a designated position, improving the efficiency of transporting the container.

As shown in FIG. 2, an embodiment of the present application further provides an inbound method for warehouse goods, the method including the following.

At step S21: in response to an inbound instruction, position information of a to-be-stored position of a target container, indicated by the inbound instruction, is determined. The term "inbound" indicates moving a target container to a designated position in the warehouse, the warehouse is provided with a plurality of stacked containers, the to-be-stored position of the target container may be at the top layer of the column of containers to which the target container is to be moved, or may be at a middle layer of that column of containers, or at the bottom layer of that column of containers. In addition to storing the position information of each container in the warehouse and the to-be-stored position information of the target container, the database of the warehouse system may also store the number of the layer in the column corresponding to the to-be-stored position of the target container; for example, the target container is to be placed at the third layer, counted from bottom to top, of a column of containers. In the case that each container is a standardized part, the number of the layer can be calculated by the coordinate of the container in the vertical direction and the height of the container. By responding to the inbound instruction, the to-be-stored position information of the target container may be determined, and the position information includes the coordinates of the target container in the horizontal direction and the coordinate in the vertical direction.

At step S22: if a container group including at least one container is stacked above the to-be-stored position of the target container, a first carrying mechanism of the carrying robot is driven to lift the container group; in a case where the to-be-stored position of the target container is located between the plurality of containers, that is, there is a container present at the to-be-stored position of the target container, the container group stacked above the position can be lifted by the first carrying mechanism of the carrying robot. When the to-be-stored position of the target container is located at the bottom layer, a plurality of stacked containers may be present above the position, so the container group may comprise a plurality of containers. When the to-be-stored position of the target container is located at the second layer, counting from top to bottom, in the column of goods, the container group includes only one container. By lifting the container group stacked above the to-be-stored position of the target container through the first carrying mechanism, obstruction to the storage of the target container caused by the container group can be removed.

At step S23, in the case where the lifting of the container group is completed, that is, when the first carrying mechanism lifts the container group to a certain height from the target container, the second carrying mechanism of the carrying robot is driven to move the target container to the first position. The first position represents the to-be-stored position of the target container. After the target container is moved to the first position, the first carrying mechanism is driven to release the container group, that is, to stack the container group above the target container, so that after completion of storage of the target container, normal stacked storage of other container group can still be maintained.

At step S24: the position information of each container in the container group and the position information of the target container are updated. After the target container is moved to the first position, the storage of the target container is completed, then the container group is stacked above the target container, and each container in the container group is elevated compared with its original position, so the coordinate of each container in the container group in the vertical direction needs to be updated. The updating method may be such that the value of the original coordinate of each container in the vertical direction plus the height of the target container is taken as the updated coordinate of the vertical direction of each container in the container group. The first position is taken as the updated position information of the target container, and the first position may also be indicated by the to-be-stored position information of the target container in the inbound instruction.

Embodiments of the present application provide an inbound method for warehouse goods. In this method, containers are stored in a stacked manner, a carrying robot transports a target container to a to-be-stored position, and in the case where there is a container group stacked above the to-be-stored position, a first carrying mechanism is driven to lift the container group above the to-be-stored position, and then the target container is carried to the to-be-stored position; the position of the target container is updated after carrying is completed, and the position of the container group stacked above the target container is updated. In the whole inbound process, only the positions of the containers need to be positioned and updated, without the need to use a rack to store the containers, so that the container can be stored into the warehouse in a sample and rapid way. This inbound method can conveniently adjust the storage mode of the warehouse, thus improving the efficiency of goods storage and carrying.

In some embodiments, the position information is represented by three-dimensional coordinates. It should be noted that the three-dimensional coordinates in the embodiments are used to represent a world coordinate system, and the world coordinate system is an objective space for defining physical world positions, that is, the position information indicates an absolute coordinate value. In practice, the coordinates of the container are uniformly used to calibrate a fixed point of the container, for example, a right upper corner of a front surface of the container or a central position of the front surface of the container, so that based on a known size of the container, the carrying robot can be accurately aligned with and carry the container.

In some embodiments, before driving the first carrying mechanism of the carrying robot to lift the container group, the carrying method further includes: driving the first carrying mechanism and the second carrying mechanism to move in the vertical direction based on the coordinate of the vertical direction in the three-dimensional coordinates. The first carrying mechanism is configured to carry the container group located above the to-be-stored position of the target container, and the second carrying mechanism is configured to carry the target container to the to-be-stored position. Therefore, the first carrying mechanism is located above the second carrying mechanism, and the first carrying mechanism can be positioned at the position of the container group stacked above the to-be-stored position, and lift the container group stacked above the to-be-stored position, so that the to-be-stored position, i.e. the first position, becomes idle, and then the second carrying mechanism is positioned at the to-be-stored position, and is driven to move the target container to the first position.

In some embodiments, before driving the first carrying mechanism of the carrying robot to lift the container group, the carrying method further includes: driving the carrying robot to move to a to-be-stored area of the target container based on the three-dimensional coordinates. In embodiments of the present application, the to-be-stored position of the target container may be in any area of the warehouse. When the carrying robot receives the inbound instruction of the target container, a distance exists between the carrying robot and the to-be-stored position of the target container, and the carrying robot may move to the area where the to-be-stored position of the target container is located according to the to-be-stored position information of the target container. It should be noted that the movement of the carrying robot includes, but is not limited to, movement in a horizontal direction, but may also be movement in a non-horizontal direction with a certain slope. The carrying robot may navigate to the area where the to-be-stored position of the target container is located according to the x-coordinate and y-coordinate of the three-dimensional coordinates in the horizontal directions.

In some embodiments, before the carrying mechanism lifts the container, the carrying method further includes: driving the carrying mechanism to align with the corresponding container based on the position identifier on the outer surface of the corresponding container. It should be understood that the term "align" used herein expresses the meaning of positional alignment, that is, the carrying mechanism is aligned with the position where the corresponding container is located, and the standard of alignment can be such that the carrying mechanism can accurately grasp and move the corresponding container. During the inbound process of the target container, the first carrying robot is driven to lift the container group stacked above the to-be-stored position and, therefore, the first carrying mechanism needs to be aligned with the container above the to-be-stored position. Each container in the warehouse has one such position identifier, and the position identifier may be a mark with precise position information, such as a two-dimensional code, a bar code, or the like, and the position identifier may also be a pattern such as a triangle, right-angled sides, or the like. Embodiments of the present application do not limit the shape and pattern of the position identifier; as long as the position identifier is disposed at a fixed position of the container, the first carrying mechanism can be quickly aligned with the corresponding container through the position identifier, which facilitates the first carrying mechanism lifting the container group stacked above the to-be-stored position. Thereafter, the target container is moved to the to-be-stored position by the second carrying mechanism.

In some embodiments, it is also possible to align the carrying mechanism with the corresponding container by photographing the corresponding container and driving the carrying mechanism to align with the corresponding container based on a picture area where the corresponding container is located in a picture obtained from the photographing. That is, in the process of accurately aligning the carrying mechanism with the container, in addition to the alignment method based on the position identifier described in the previous embodiment, the alignment can also be realized by directly performing image recognition and positioning on the container. The first image acquisition module of the first carrying mechanism identifies and positions an outer contour of the container, which helps the first carrying module accurately lift the container group, thus improving the stability of carrying the container and the safety of the carrying operations.

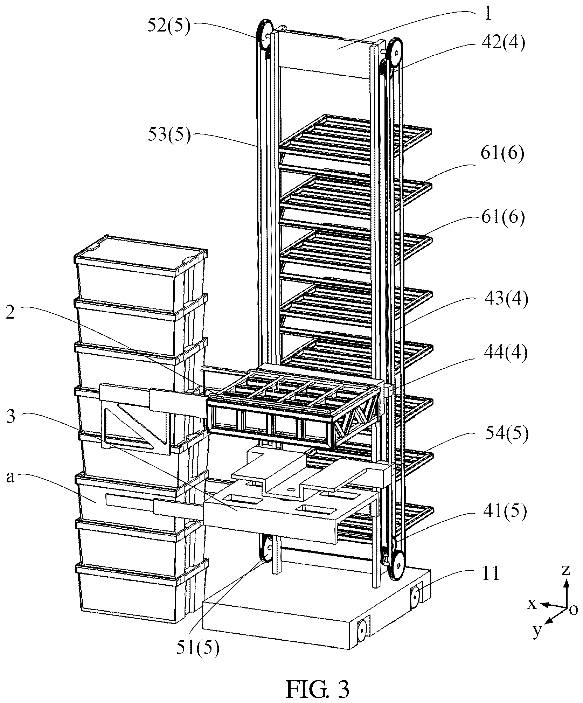

As shown in FIG. 3, embodiments of this application further provide a carrying robot for carrying warehouse goods. It should be noted that the stored goods in the embodiments of this application do not need to rely on a rack for storage, and a plurality of goods may be directly stacked in a warehouse. The term "stacked" used herein means multiple goods are in contact with and support one another. The stored goods may be stored in a container and thus represented by the container, and one or more of the stacked containers may be directly carried in the outbound or inbound process of the goods. All of the following are illustrated using containers to represent the goods; it should be understood, however, that the goods may not be stored in containers or may be stored in other manners, and the corresponding carrying method are basically the same and will not be repeated herein.

In this embodiment, the carrying robot includes a mobile bracket 1, a first carrying mechanism 2, a second carrying mechanism 3, a first lifting mechanism 4, a second lifting mechanism 5, and a buffer mechanism 6.

The mobile bracket 1 extends in the vertical direction and is movable, the direction in which the mobile bracket 1 extends represents the maximum size direction of the mobile bracket 1, and in the embodiment of the present application, the maximum size direction of the mobile bracket 1 represents the height direction of the mobile bracket 1, that is, in the normal working state, the height direction of the mobile bracket 1 extends in the vertical direction in the absolute coordinate system. That the mobile bracket 1 is movable indicates that the mobile bracket 1 is capable of moving relative to the ground or another surface. In some embodiments, the mobile bracket 1 is provided with rollers 11 on an end of the mobile bracket 1 close to the ground, and the mobile bracket 1 can be driven to move by driving the rollers 11 to move. It should be noted that the rollers 11 in the embodiment of the present application can drive the carrying robot to move in the front-back direction, and can also drive the carrying robot to move in the front-back direction and the left-right direction. In response to the inbound instruction or the outbound instruction of the target container, the rollers 11 of the mobile bracket 1 can be driven to move, so that the carrying robot can be moved to a position close to the target container or near a to-be-stored position of the target container according to the position information in the instruction. It should be understood that in the normal working state, the ground or another surface on which the mobile bracket 1 moves is a horizontal surface, and the height direction of the mobile bracket 1 is a vertical direction perpendicular to the horizontal surface, but this does not mean that both the horizontal surface and the vertical direction need to be absolutely horizontal and vertical, but allows for the presence of concave and convex errors of the ground and the manufacturing error of the mobile bracket 1, as long as they are substantially horizontal and vertical in the normal working state.

As shown in FIG. 3, the first carrying mechanism 2 is configured to transfer the container group stacked above the target container or the container group stacked above the to-be-stored position of the target container, the container group including at least one container. In response to the outbound instruction of the target container, the carrying robot needs to move to the position close to the target container according to the position information of the target container in the outbound instruction, and then the container group above the target container is lifted by the first carrying mechanism 2, making the container group separate from the target container, so that the target container can be conveniently moved out. In response to the inbound instruction of the target container, the carrying robot needs to lift the container group stacked above the to-be-stored position of the target container, making the to-be-stored position of the target container idle, thereby facilitating moving the target container into the to-be-stored position. The first carrying mechanism 2 is arranged on a first side of the mobile bracket 1. As shown in FIG. 3, the height direction of the mobile bracket 1 is the Z-direction, the width direction is the X-direction, and the Z-direction and the X-direction cooperatively determine the XOZ plane. The first carrying mechanism 2 is located on one side of the XOZ plane, and may be considered on the side where the positive direction on the Y-axis is located (the positive direction is the direction indicated by the arrow).

As shown in FIG. 3, the second carrying mechanism 3 is configured to carry the target container, and the second carrying mechanism 3 is also arranged on the first side of the mobile bracket 1, that is, the first carrying mechanism 2 and the second carrying mechanism 3 are located on the same side of the mobile bracket 1. The second carrying mechanism 3 is located below the first carrying mechanism 2, wherein the term "below" means the second carrying mechanism 3 is located below the first carrying mechanism 2 in the normal use state of the carrying robot ("below" along the Z-axis in FIG. 3). By arranging the second carrying mechanism 3 below the first carrying mechanism 2, in the outbound process of the target container, in the case where there is a container group having at least one container stacked above the target container, the container group above the target container can be lifted by the first carrying mechanism 2, so that the second carrying mechanism 3 can carry the target container away individually.

As shown in FIG. 3, the first lifting mechanism 4 is configured to drive the first carrying mechanism 2 to move in the vertical direction. The first carrying mechanism 2 can move in the vertical direction relative to the mobile bracket 1, so as to align the first carrying mechanism with the lowermost container in the container group. The first lifting mechanism 4 may be mounted on the mobile bracket 1. Embodiments of the present application do not limit the manner in which the first lifting mechanism 4 is mounted on the mobile bracket 1, as long as the first lifting mechanism 4 can drive the movement of the first carrying mechanism 2. The first carrying mechanism 2 can be movably connected to the mobile bracket 1, and the first lifting mechanism 4 can drive the first carrying mechanism 2 to move in the extending direction (the Z-direction shown in FIG. 3) of the mobile bracket 1, thereby realizing the movement of the first lifting mechanism 4 in the vertical direction. It should be noted that the specific form of the first lifting mechanism 4 is not limited in embodiments of the present application, as long as the first lifting mechanism 4 can drive the first carrying mechanism 2 to move in the vertical direction.

As shown in FIG. 3, the second lifting mechanism 5 is configured to drive the second carrying mechanism 3 to move in the vertical direction independently of the first carrying mechanism 2. The second lifting mechanism 5 is a mechanism independent of the first lifting mechanism 4, that is, the first lifting mechanism 4 and the second lifting mechanism 5 work independently, and the first lifting mechanism 4 and the second lifting mechanism 5 do not interfere with each other. That is to say, the movement of the first carrying mechanism 2 and the movement of the second carrying mechanism 3 in the vertical direction are independent of each other; for example, during the movement of the first carrying mechanism 2, the second carrying mechanism 3 may not move; or, when the first carrying mechanism 2 stops moving, the second carrying mechanism 3 may move in the vertical direction. The movement of the first transport mechanism 2 and the movement of the second transport mechanism 3 may not be synchronous, and there is no correlation between the movements of the first transport mechanism 2 and the second transport mechanism 3. It should be noted that the embodiments of the present application do not limit the specific form of the second lifting mechanism 5, as long as the second lifting mechanism 5 can drive the second carrying mechanism 3 to move in the vertical direction.

The buffer mechanism 6 is fixedly mounted on a second side of the mobile bracket 1 (the negative direction of the Y-axis in FIG. 3, and the negative direction represents the direction opposite to the direction indicated by the arrow), wherein the second side and the first side are opposite sides of the mobile bracket 1, and the buffer mechanism 6 is configured to store the target container carried by the second carrying mechanism 3. That is to say, after the second carrying mechanism 3 carries the target container away from the plurality of stacked containers, the second carrying mechanism 3 can place the target container on the buffer mechanism 6, so that the second carrying mechanism 3 can start the carrying work for a next target container without the need of immediately transferring the target container to the designated position, which can improve the efficiency of carrying the container.

Embodiments of the present disclosure provide a mobile robot, including a mobile bracket, a first carrying mechanism, a second carrying mechanism, a first lifting mechanism, a second lifting mechanism, and a buffer mechanism. The mobile bracket extends in the vertical direction and is movable. The first carrying mechanism is configured to transfer the container group stacked above the target container or the container group stacked above the to-be-stored position of the target container; the second carrying mechanism is configured to carry the target container. The first lifting mechanism is configured to drive the first carrying mechanism to move in the vertical direction. The second lifting mechanism is configured to drive the second carrying mechanism to move independently of the first carrying mechanism in the vertical direction. The buffer mechanism is fixedly mounted to the second side of the mobile bracket and configured to store the target container carried by the second carrying mechanism. In the embodiments of the present application, the first lifting mechanism is used to drive the first carrying mechanism to move in the vertical direction, the second lifting mechanism is used to drive the second carrying mechanism to move in the vertical direction, and the movement of the first carrying mechanism and the movement of the second carrying mechanism are independent of each other, so that the first carrying mechanism can cooperate with the second carrying mechanism to facilitate the second carrying mechanism carrying the target container, and in the inbound process of the target container, the first carrying mechanism can lift the container group at the to-be-stored position, so that the target container can be moved into the to-be-stored position. Through the independent carrying operations of the first carrying mechanism and the second carrying mechanism, the plurality of containers can be stacked and stored in the warehouse, without the need for a rack to store the containers, so that the user can quickly deploy and relocate the warehouse, thus improving the efficiency of goods storage and transportation, and the warehousing business can be quickly adjusted, thus to meeting the needs of diversified warehousing business.

In some embodiments, as shown in FIG. 3, the first lifting mechanism 4 includes a first driving wheel 41, a first synchronizing wheel 42, a first synchronizing belt 43 and a first connecting block 44. The first driving wheel 41 is configured to be driven to rotate around a horizontal direction, for example, the first driving wheel 41 can be driven by a driving device to rotate around a horizontal direction (the X-direction shown in FIG. 3). The first synchronizing wheel 42 is spaced apart from the first driving wheel 41 in the vertical direction, wherein a distance between the first driving wheel 41 and the first synchronizing wheel 42 may be equal to a length of the whole mobile bracket 1 extending in the vertical direction. Embodiments of the present disclosure do not limit the relative position relationship between the first driving wheel 41 and the first synchronizing wheel 42, and the mobile bracket 1.

As shown in FIG. 3, the first driving wheel 41 is located at a lower end of the mobile bracket 1, and the first synchronizing wheel 42 is located at an upper end of the mobile bracket 1. Alternatively, in other embodiments, the first driving wheel 41 may be disposed at the upper end of the mobile bracket 1, and the first synchronizing wheel 42 may be disposed at the lower end of the mobile bracket 1. The first driving wheel 41 and the first synchronizing wheel 42 can be disposed on any suitable locations on the mobile bracket 1, as long as the first synchronizing wheel 42 can be driven by the first synchronizing belt 43 to rotate along with the first driving wheel 41.

As shown in FIG. 3, the first synchronizing wheel 42 is rotatable about a horizontal direction (the X-direction shown in FIG. 3). The first synchronizing belt 43 is connected to the first driving wheel 41 and the first synchronizing wheel 42, and the first synchronizing belt 43 is configured to drive the first synchronizing wheel 42 to rotate along with the first driving wheel 41. The first connecting block 44 is connected to the first synchronizing belt 43 and the first carrying mechanism 2. In the process of the first synchronizing belt 43 moving along with the first driving wheel 41, the first connecting block 44 on the first synchronizing belt 43 can also move along with the first synchronizing belt 43, so that the first connecting block 44 drives the first carrying mechanism 2 to move in the vertical direction along with the first synchronizing belt 43. In embodiments of the present application, the height of the first carrying mechanism 2 in the vertical direction may be indirectly controlled by controlling the rotation of the first driving wheel 41, so as to realize that the first carrying mechanism 2 is aligned with the container in the container group that is close to the target container, or the first carrying mechanism 2 is controlled to be aligned with the container above the to-be-stored position.

It should be noted that, in other embodiments, the first lifting mechanism may also include a driving gear, a driven gear, and a chain to realize transmission, or in the form of a non-synchronizing belt and wheel transmission or a roller group-wire rope. In some embodiments, the first lifting mechanism may also be configured as a power climbing wheel group, which does not need external power and has a power source of its own. When the climbing wheel group receives a moving signal, the climbing wheel group may move up and down along the mobile bracket. In embodiments of this present application, the first lifting mechanism includes, but is not limited to, the implementations described above, as long as the first carrying mechanism can be driven to move in the vertical direction.

In embodiments of the present application, as shown in FIG. 3, the second lifting mechanism 5 includes a second driving wheel 51, a second synchronizing wheel 52, a second synchronizing belt 53, and a second connecting block 54. The second driving wheel 51 is configured to be driven to rotate around a horizontal direction; for example, the second driving wheel 51 may be driven by a driving device to rotate around a horizontal direction (the X-direction shown in FIG. 3). The second synchronizing wheel 52 is spaced apart from the second driving wheel 51 in the vertical direction, wherein a distance between the second driving wheel 51 and the second synchronizing wheel 52 may be equal to a length of the whole mobile bracket 1 extending in the vertical direction. As shown in FIG. 3, the second driving wheel 51 is located at the lower end of the mobile bracket 1, and the second synchronizing wheel 52 is located at the upper end of the mobile bracket 1. Alternatively, in other embodiments, the second driving wheel 51 may be disposed at the upper end of the mobile bracket 1, and the second synchronizing wheel 52 may be disposed at the lower end of the mobile bracket 1. The second driving wheel 51 and the second synchronizing wheel 52 may be disposed on any suitable location on the mobile bracket 1, as long as the second synchronizing wheel 52 can be driven by the second synchronizing belt 53 to rotate along with the second driving wheel 51.

As shown in FIG. 3, the second synchronizing wheel 52 is rotatable about a horizontal direction (the X-direction shown in FIG. 3). The second synchronizing belt 53 is connected to the second driving wheel 51 and the second synchronizing wheel 52, and the second synchronizing belt 53 is configured to drive the second synchronizing wheel 52 to rotate along with the second driving wheel 51. It should be noted that, in other embodiments, the second lifting mechanism 5 may also include a driving gear, a driven gear and a chain for realizing transmission, or may be in a form of a non-synchronizing belt and wheel transmission, a roller group-wire rope, or a climbing wheel group transmission that is capable of vertical climbing on the mobile bracket. The second lifting mechanism in the embodiments of the present application includes, but is not limited to, the implementations described above, as long as the second carrying mechanism can be driven to move in the vertical direction. The second connecting block 54 is connected to the second synchronizing belt 53 and the second carrying mechanism 3, and in the process of the second synchronizing belt 53 moving along with the second driving wheel 51, the second connecting block 54 on the second synchronizing belt 53 can also move along with the second synchronizing belt 53, so that the second connecting block 54 drives the second carrying mechanism 3 to move along with the second synchronizing belt 53 in the vertical direction. In embodiments of the present application, the height of the second carrying mechanism 3 in the vertical direction may be indirectly controlled by controlling the rotation of the second driving wheel 51, so as to realize that the second carrying mechanism 3 is aligned with the target container, or the second carrying mechanism 3 is controlled to be aligned with the to-be-stored position.

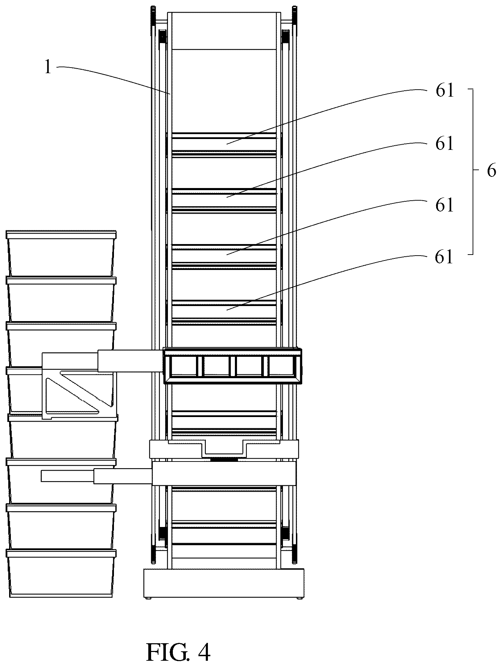

In some embodiments, as shown in FIG. 4, the buffer mechanism 6 includes a plurality of buffer shelves 61 arranged at intervals in the vertical direction (the top-bottom direction shown in FIG. 4), and it should be noted that the distance between the buffer shelves 61 may be greater than the height of the container so that the arrangement of the buffer shelves 61 does not interfere with the placement of the containers. The distances between the plurality of buffer shelves 61 may be equal or unequal. The buffer shelf 61 is fixedly connected to the mobile bracket 1, and is configured to store the target container. That is to say, the position of the buffer shelf 61 is fixed, and when the target container is placed on the buffer shelf 61, the position information of the target container is updated, and the updated position information of the target container is the position information of the buffer shelf 61 where the target container is placed. In this embodiment, multiple buffer shelves are provided, so that the carrying robot may carry multiple containers into the buffer mechanism, and then the multiple containers are uniformly conveyed to a designated position, so that the efficiency of carrying the containers can be improved.

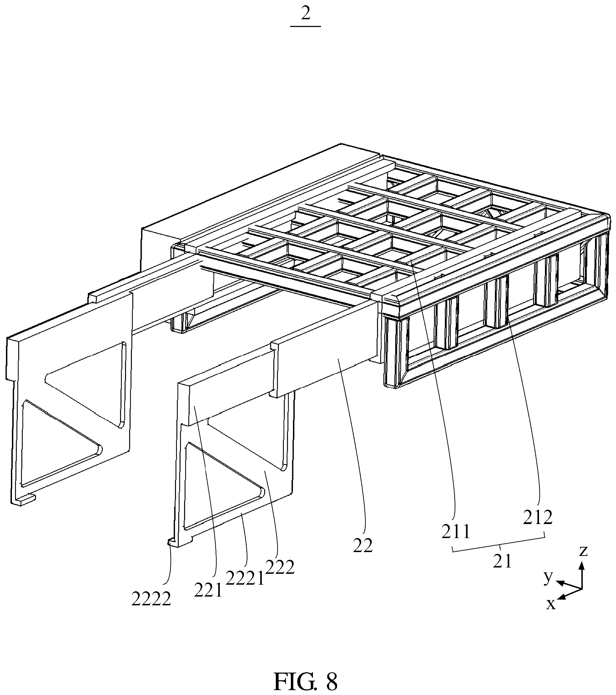

In some embodiments, as shown in FIG. 8, the first carrying mechanism 2 includes a first mounting member 21 and two first telescopic arms 22. The first mounting member 21 is connected to the first lifting mechanism 4, and the first mounting member 21 is driven by the first lifting mechanism 4 to move up or down in the vertical direction. The two first telescopic arms 22 are both movably connected to the first mounting member 21, and the first telescopic arm 22 are synchronously reciprocally translatable relative to the first mounting member 21 in a first direction (the X-direction shown in FIG. 8). The expression "movably connected" refers to that the first telescopic arm 22 is extendable and shortenable in its own extension direction, so as to enable variation in the length of the first telescopic arm 22. In other embodiments, the expression "movably connected" may further indicate that the first telescopic arm 22 is movable in the horizontal direction relative to the first mounting member 21, thereby realizing the carrying of the container group by the first telescopic arm 22. Telescoping and moving of the first telescopic arm 22 can both be realized by being driven by a driving component. In this embodiment, the two first telescopic arms 22 are disposed opposite to each other (the two first telescopic arms 22 in FIG. 8 are disposed at two ends of the first mounting member in the Y-direction). The first direction belongs to the horizontal direction, and it should be noted that the horizontal direction includes the direction of any straight-line in the horizontal plane, and the first direction represents any straight-line direction in the horizontal plane.

In this embodiment of the present application, the first mounting member 21 is movably connected to the mobile bracket 1, and the first telescopic arm 22 reciprocally translatable in the first direction (the X-direction shown in FIG. 8) is disposed on the first mounting member 21. With the first telescopic arm 22 extending out, the first telescopic arm 22 can be in contact with the container or place the container. For example, in the process of moving the target container out, the first telescopic arm 22 is in contact with the container through the extension of the first telescopic arm 22, and then the first lifting mechanism 4 drives the first mounting member 21 to move upwards, so as to drive the first telescopic arm 22 to move upwards, thereby realizing that the first telescopic arm 22 drives the container to move up, so that the container is disengaged from the target container. After the target container is stored to the first position, the first lifting mechanism 4 may drive the first mounting member 21 to move downwards, so as to drive the first telescopic arm 22 to move downwards, thereby realizing that the first telescopic arm 22 drives the container to fall back.

In some embodiments, as shown in FIG. 8, the first mounting member 21 includes a top wall 211 and side walls 212, and the top wall 211 extends in the first direction (the X-direction shown in FIG. 8). It should be noted that the extending direction of the top wall 211 represents the length direction of the top wall, that is, the length direction of the top wall 211 is in the first direction. The top wall 211 can be approximately regarded as a two-dimensional plane, and the extending direction of the top wall can be parallel to the horizontal direction. The side walls 212 extend in the first direction and are connected below the top wall 211 (at the negative side of the Z-axis shown in FIG. 8), and the two side walls 212 are disposed opposite to each other at two ends of the top wall 211 in the Y-direction in FIG. 8. The two first telescopic arms 22 are connected to opposite surfaces of the two side walls 212, respectively. The meaning of "opposite" is opposite to the meaning of "facing away", the two side walls 212 are disposed opposite to each other, the opposite surfaces of the two side walls 212 are inner surfaces, and the surfaces of the two side walls 212 that face away from each other are outer surfaces. It will be appreciated that the two first telescopic arms 22 are connected below the top wall 211 to enclose a space, and the inner surfaces of the side walls are surfaces proximate to the space. One end of the first telescopic arm 22 is connected to the inner surface of the side wall, and the other end of the first telescopic arm 22 is extendable and retractable relative to the one end. A distance between the two first telescopic arms 22 can be slightly greater than the width of the container, so that the two telescopic arms can extend to the two sides of the container and can also clamp the container to improve the stability of carrying the container.

In some embodiments, as shown in FIG. 8, a first end 221 of the first telescopic arm 22 is provided with an extension arm 222 extending toward the second carrying mechanism 3 (FIG. 3), wherein the first end 221 is an end of the first telescopic arm 22 away from the side wall 212 in the extended state. It should be noted that the first telescopic arm 22 has two opposite ends in the extended state, one end of the first telescopic arm 22 is connected to the side wall 212, and the end away from the side wall is the first end 221. By arranging the extension arm 222 at the first end, the container can be contacted through a bottom end 2221 of the extension arm 222 (a lower end in the Z-direction shown in FIG. 8). When the first carrying mechanism 2 and the second carrying mechanism 3 carry adjacent containers, the height of the container limits the distance between the first mounting member 21 and the second carrying mechanism 3. In the case where the size of the container is small, lifting the container through the extension arm 222 can reduce the limitation and interference between the first mounting member 21 and the second carrying mechanism 3, and can also facilitate the first carrying mechanism 2 and the second carrying mechanism 3 moving the container with a small size.

In some embodiments, as shown in FIG. 8, an end of the extension arm 222 away from the first telescopic arm 22 (the bottom end 2221 shown in FIG. 8) is provided with a catch portion 2222, and the catch portion 2222 may extend and retract in opposite directions of the two first telescopic arms 22 to connect and disengage from the corresponding container. The corresponding container represents the container that the catch portion 222 is currently able to contact. For example, in the outbound process of the container, the corresponding container represents the container above and closest to the target container; and in the inbound process of the container, the corresponding container represents the container above the to-be-stored position of the target container. In this embodiment of the present application, each first telescopic arm 22 is provided with the extension arm 222, the two extension arms 222 are spaced apart in the Y-direction shown in FIG. 8, each extension arm 222 is provided with the catch portion 2222, and the catch portions 2222 are disposed on the opposite sides of the two extension arms 222 and are extendable and retractable in opposite directions to connect or disengage from the container. It should be noted that, when the catch portion 2222 is in an extended state, the distance between the catch portions 2222 becomes shorter, and then the catch portions 2222 make more tight contact with the container. The container is caught by two catch portions 2222. In some embodiments, the container has a limiting structure in the vertical direction, and the catch portion 2222 can engage in the limiting structure, so that the catch portion 2222 and the container can be stably connected in the process of lifting the container. Of course, embodiments of the present application do not limit the specific form of the catch portion 2222, as long as the catch portion 2222 can be stably connected to the container in the lifting process.

It should be noted that each extension arm 222 may be provided with one or more catch portions 2222. By arranging multiple catch portions 2222, the stability of carrying the container by the first carrying mechanism 2 can be improved.

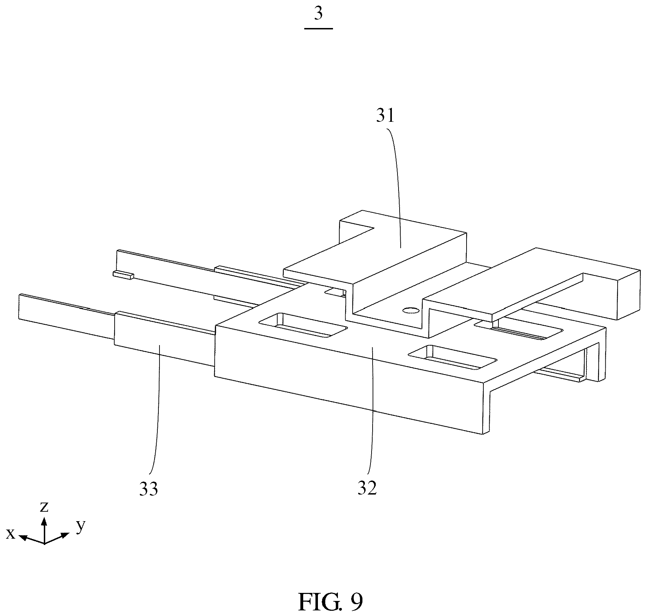

In some embodiments, as shown in FIG. 9, the second carrying mechanism 3 includes a second mounting member 31, a third mounting member 32, and a second telescopic arm 33. The second mounting member 31 is connected to the second lifting mechanism 5 (FIG. 3), and the second lifting mechanism 5 may drive the second mounting member 31 to move up or down in the vertical direction (the Z-direction shown in FIG. 3). The third mounting member 32 is connected below the second mounting member 31 (at the negative side in the Z-direction shown in FIG. 9), and there are two connection relationships between the third mounting member 32 and the second mounting member 31. In one embodiment, the third mounting member 32 is horizontally movable relative to the second mounting member 31, and the third mounting member 32 may transfer the container to the buffer shelf by means of horizontal translation. For example, the buffer mechanism is disposed at a positive side in the Y-direction and at a negative side in the X-direction, that is, the container moves in or out of the buffer shelf in the X-direction, which is parallel to the telescopic direction of the second carrying mechanism; the second carrying mechanism extends in the X-direction to grasp the target container, translates in the negative X-direction, and then extends in the negative X-direction to place the target container on the buffer shelf. Alternatively, as shown in FIG. 9, the third mounting member 32 is translatable and rotatable in the horizontal direction relative to the second mounting member 31. The third mounting member 32 and the second mounting member 31 may be connected by a rotary mechanism, so that the second mounting member 31 can rotate relative to the third mounting member, for example, by 90 degrees. Each of the two second telescopic arms 33 is movably connected to the third mounting member 32, and the two second telescopic arms 33 are arranged opposite to each other and can synchronously reciprocally translate in the first direction (the X-direction shown in FIG. 9) relative to the third mounting member 32, wherein the first direction belong to the horizontal direction. Opposite sides of the second telescopic arms 33 may be provided with catch portions, and the catch portions are extendable and retractable in opposite directions to catch the target container. The carrying process performed by the second carrying mechanism 3 is described in the follow.

In the outbound process of the target container, after the first carrying mechanism lifts the container group above the target container, the second carrying mechanism 3 drives the second telescopic arm 33 to telescope to connect to the target container a, the second telescopic arm 33 is lifted by the second carrying mechanism 3, the second telescopic arm 33 is shortened, the target container a is conveyed to below the third mounting member 32, the third mounting part 32 is driven to rotate by 90 degrees relative to the second mounting member 31, and then the second telescopic arm 33 is driven to extend, so that the target container a can pass through the mobile bracket 1 and reach the buffer shelf.

Referring to FIG. 3 through FIG. 7, the whole carrying process performed by the carrying robot is described below.

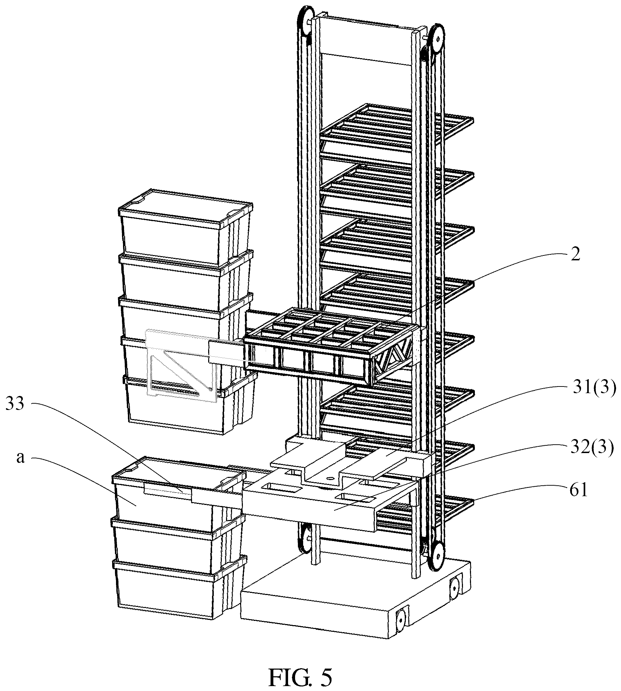

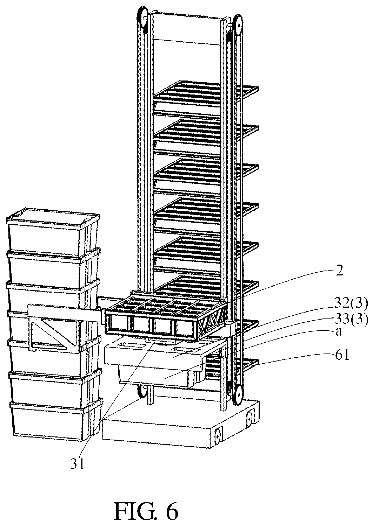

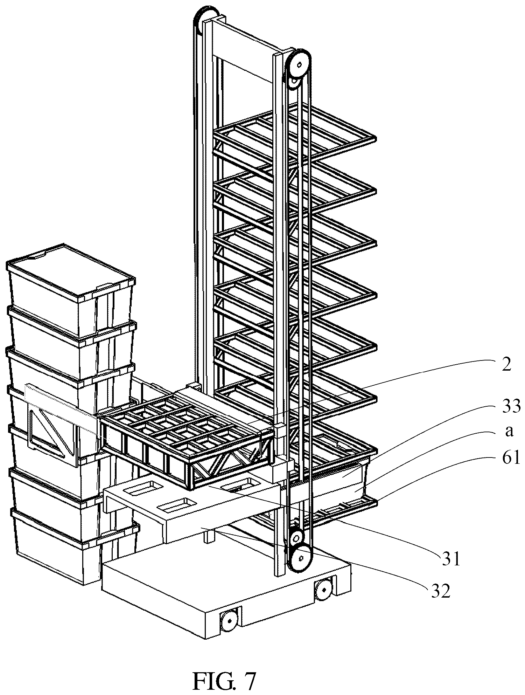

When the carrying robot receives an outbound instruction of the target container, the target container a is located in the plurality of stacked containers, the target container a shown in FIG. 3 is the third container counting up from the bottom, then all containers above the target container a form a container group, and the container group shown in FIG. 3 has five containers. The outbound instruction indicates that the target container is to be moved out of the stacked containers and carried to a designated position. In the outbound process of the target container a, the first carrying mechanism 2 is first driven to move in the vertical direction by the first synchronizing belt 43, so that the first carrying mechanism 2 is aligned with the container above the target container a. As shown in FIG. 5, the first telescopic arm 22 of the first carrying mechanism 2 extends out to grasp the container above the target container a, and then the first carrying mechanism 2 lifts the container above the target container a, so that the container group above the target container a is lifted. Then, the second carrying mechanism 3 is driven to align with the target container a, and the second telescopic arm 33 extends out to grasp the target container a. As shown in FIG. 6, the second telescopic arm 33 retracts to drive the target container a to below the third mounting member 32, and finally moves the target container a to the buffer shelf 61. When the buffer shelf 61 on which the target container a is to be placed is located below the first carrying mechanism 2, as shown in FIG. 6 and FIG. 7, the second carrying mechanism 3 can be directly driven to move in the vertical direction, so that the second carrying mechanism 3 is aligned with the buffer shelf 61 on which the target container is to be placed (the second carrying mechanism 3 shown in FIG. 7 is aligned with the lowermost buffer shelf 61 of the buffer mechanism). Then, under the action of the rotary mechanism, the third mounting member 32 is rotated by 90 degrees relative to the second mounting member 31 (the second mounting member 31 in FIG. 7 is blocked by the first carrying mechanism 2). The second extension arms 33 of the second carrying mechanism 3 extend in the direction toward the buffer shelf 61, carrying the target container a to the nearest idle buffer shelf 61 (e.g. the lowermost buffer shelf 61 shown in FIG. 7). After the second carrying mechanism 3 moves the target container away, the first carrying mechanism 2 can move downwards and release the container group onto a second container counting up from bottom.

Of course, in some embodiments, the buffer shelf 61 on which the target container a is to be placed may be located above the first carrying mechanism 2 and, in this case, the first carrying mechanism 2 may be first driven to move downwards and release the container group onto the second container counting up from bottom, and then the first carrying mechanism 2 is driven to above the buffer shelf 61 on which the target container a is to be placed, so that the second carrying mechanism 3 can reach the buffer shelf 61 on which the target container a is to be placed without any obstacle. When the second carrying mechanism 3 moves up and down to align with the buffer shelf 61 on which the target container a is to be placed, the third mounting member 32 is rotated by 90 degrees relative to the second mounting member 31 under the action of the rotary mechanism. The second telescopic arms 33 extend out of the second carrying mechanism 3 in a direction towards the buffer shelf 61, carrying the target container a to the buffer shelf 61, and the outbound process of one target container is thus completed. Then, the carrying robot may proceed to the outbound process of a next container, and after all the containers to be carried have been placed on the buffer shelves, the carrying robot uniformly transports the containers on the buffer shelves to a designated place.

When the carrying robot receives an inbound instruction of the target container, the carrying robot needs to carry the target container to the plurality of stacked containers. Each of the multiple buffer shelves can receive a container to be stored. The carrying robot transports the target container to the area around the position indicated in the inbound instruction of the target container, and the first carrying mechanism lifts the container group at and above the to-be-stored position of the target container, so that the to-be-stored position is in an idle state. The second carrying mechanism 3 places the target container at the idle position, and then the first carrying mechanism 2 places the container group on the target container to realize stacked storage of the goods. Every time a container is put into storage, the position information of those containers with changed positions in the warehouse is updated.

The above are only preferred embodiments of the present disclosure and are not intended to limit the scope of protection of the present disclosure.

## Claims

1. An outbound method for warehouse goods, the method comprising:
in response to an outbound instruction, determining position information of a target container to be moved out indicated by the outbound instruction, the target container being one of a plurality of containers stacked in a vertical direction;
if there is a container group comprising at least one container stacked above the target container, driving a first carrying mechanism of a carrying robot to lift the container group;
driving a second carrying mechanism of the carrying robot to move the target container away from a first position after the lifting of the container group is completed, and driving the first carrying mechanism to release the container group when the first position is idle;
updating position information of each container in the container group.

2. The outbound method according to claim 1, wherein the position information is represented by three-dimensional coordinates; before driving the first carrying mechanism of the carrying robot to lift the container group, the method further comprises:
driving the first carrying mechanism and the second carrying mechanism to move in the vertical direction based on a coordinate of the vertical direction in the three-dimensional coordinates of the target container.

3. The outbound method according to claim 2, wherein before driving the first carrying mechanism of the carrying robot to lift the container group, the method further comprises:
driving the carrying robot to move to a corresponding carrying position in an area where the target container is located based on the three-dimensional coordinates of the target container.

4. The outbound method according to claim 1, wherein before the carrying mechanism lifts or moves the container, the method further comprises:
driving the carrying mechanism to align with one corresponding container based on a position identifier on an outer surface of the corresponding container; or
photographing one corresponding container and driving the carrying mechanism to align with the corresponding container based on a picture area where the corresponding container is located in a picture obtained from the photographing.

5. The outbound method according to claim 1, wherein after driving the second carrying mechanism of the carrying robot to move the target container away from the first position, the method further comprises:
placing the target container on a buffer mechanism of the carrying robot.

6. The outbound method according to claim 5, wherein the method further comprises:
updating the position information of the target container based on information of a buffer position at which the target container is placed.

7. The outbound method according to claim 1, wherein the method further comprises:
driving the second carrying mechanism of the carrying robot to move the target container away from the first position if there is no container stacked above the target container.

8. An inbound method for warehouse goods, the method comprising:
in response to an inbound instruction, determining information of a to-be-stored position of a target container indicated by the inbound instruction;
if there a container group comprising at least one container stacked above the to-be-stored position of the target container, driving a first carrying mechanism of a carrying robot to lift the container group;
driving a second carrying mechanism of the carrying robot to move the target container from a buffer mechanism to a first position after the lifting of the container group is completed, and driving the first carrying mechanism to release the container group to above the target container after the target container is moved to the first position;
updating position information of each container in the container group and position information of the target container.

9. The inbound method according to claim 8, wherein the position information is represented by three-dimensional coordinates; before driving the first carrying mechanism of the carrying robot to lift the container group, the method further comprises:
driving the first carrying mechanism and the second carrying mechanism to move in the vertical direction based on a coordinate of the vertical direction in the three-dimensional coordinates.

10. The inbound method according to claim 9, wherein before driving the first carrying mechanism of the carrying robot to lift the container group, the method further comprises:
driving the carrying robot to move to a corresponding carrying position in an area where the target container is to be stored based on the three-dimensional coordinates.

11. The inbound method according to claim 8, wherein before the carrying mechanism lifts the container group, the method further comprises:
driving the carrying mechanism to align with one corresponding container based on a position identifier on an outer surface of the corresponding container; or
photographing one corresponding container and driving the carrying mechanism to align with the corresponding container based on a picture area in which the corresponding container is located in a picture obtained from the photographing.

12. A carrying robot configured to carry warehouse goods, comprising:
a mobile bracket extending in a vertical direction and being movable;
a first carrying mechanism configured to carry a container group located above a target container or a container group stacked above a to-be-stored position of a target container, the container group comprising at least one container, and the first carrying mechanism being arranged on a first side of the mobile bracket;
a second carrying mechanism configured to carry the target container, the second carrying mechanism being arranged on the first side of the mobile bracket and located below the first carrying mechanism;
a first lifting mechanism configured to drive the first carrying mechanism to move in the vertical direction;
a second lifting mechanism configured to drive the second carrying mechanism to move in the vertical direction independently of the first carrying mechanism; and
a buffer mechanism fixed on a second side of the mobile bracket and configured to store the target container carried by the second carrying mechanism.

13. The carrying robot according to claim 12, wherein the first lifting mechanism comprises:
a first driving wheel configured to be driven to rotate around a horizontal direction;
a first synchronizing wheel spaced apart from the first driving wheel in the vertical direction and rotatable around the horizontal direction;
a first synchronizing belt connected to the first driving wheel and the first synchronizing wheel, and configured to drive the first synchronizing wheel to rotate along with the first driving wheel;
a first connecting block connected to the first synchronizing belt and the first carrying mechanism, and configured to drive the first carrying mechanism to move in the vertical direction along with the first synchronizing belt;
and/or,
wherein the second lifting mechanism comprises:
a second driving wheel configured to be driven to rotate around the horizontal direction;
a second synchronizing wheel spaced apart from the second driving wheel in the vertical direction and rotatable around the horizontal direction;
a second synchronizing belt connected to the second driving wheel and the second synchronizing wheel, and configured to drive the second synchronizing wheel to rotate along with the second driving wheel; and
a second connecting block connected to the second synchronizing belt and the second carrying mechanism, and configured to drive the second carrying mechanism to move in the vertical direction along with the second synchronizing belt.

14. The carrying robot according to claim 12, wherein the buffer mechanism comprises a plurality of buffer shelves arranged at intervals in the vertical direction, and the buffer shelves are fixedly connected to the mobile bracket to store the target container.

15. The carrying robot according to claim 12, wherein the first carrying mechanism comprises:
a first mounting member connected to the first lifting mechanism to move up or down in the vertical direction;
two first telescopic arms both movably connected to the first mounting member, and the two first telescopic arms being arranged opposite to each other and synchronously reciprocally translatable in a first direction relative to the first mounting member to carry the container group, wherein the first direction belongs to the horizontal direction.

16. The carrying robot according to claim 15, wherein the first mounting member comprises:
a top wall extending in the first direction;
two side walls extending in the first direction and connected below the top wall, the two side walls being arranged opposite to each other;
wherein the two first telescopic arms are connected to opposite surfaces of the two side walls, respectively.

17. The carrying robot according to claim 16, wherein a first end of each first telescopic arm is provided with an extension arm extending towards the second carrying mechanism, and the first end is an end of the first telescopic arm away from the side wall in an extended state.

18. The carrying robot according to claim 17, wherein one end of each extension arm away from the first telescopic arm is provided with a catch portion, and the catch portions are extendable and retractable in opposite directions between the two first telescopic arms to connect and disengage from one corresponding container.

19. The carrying robot according to claim 12, wherein the second carrying mechanism comprises:
a second mounting member connected to the second lifting mechanism to move up or down in the vertical direction;
a third mounting member connected below the second mounting member, the third mounting member configured to be translatable in a horizontal direction relative to the second mounting member, or translatable and rotatable around a horizontal direction;
two second telescopic arms both movably connected to the third mounting member, the two second telescopic arms being arranged opposite to each other and synchronously reciprocally translatable in a first direction relative to the third mounting member, wherein the first direction belongs to the horizontal direction.
